# EUROPEAN PATENT SPECIFICATION

(11) **EP 3 643 445 B1**
(45) Date of publication and mention of the grant of the patent: **29.01.2025**
(21) Application number: 18841281.1
(22) Date of filing: 09.05.2018
(51) Int. Cl.: B23P 21/00, G05B 19/418, G06Q 50/04

(54) **PRODUCTION MANAGEMENT SYSTEM AND PRODUCTION MANAGEMENT METHOD**
PRODUKTIONSVERWALTUNGSSYSTEM UND PRODUKTIONSVERWALTUNGSVERFAHREN
SYSTÈME DE GESTION DE PRODUCTION ET PROCÉDÉ DE GESTION DE PRODUCTION

(30) Priority: 31.07.2017 JP 2017147962
(43) Date of publication of application: 29.04.2020
(73) Proprietor: Daikin Industries, Ltd., Osaka-shi, Osaka 530-0001 (JP)
(72) Inventor: YOKOTA, Yoshihiko, Osaka-shi Osaka 530-8323 (JP); OHTANI, Yousuke, Osaka-shi Osaka 530-8323 (JP); KAYAMA, Norio, Osaka-shi Osaka 530-8323 (JP); UCHIYAMA, Masaaki, Osaka-shi Osaka 530-8323 (JP); KISHIMA, Hiroshi, Osaka-shi Osaka 530-8323 (JP); SEKIDA, Naoto, Osaka-shi Osaka 530-8323 (JP); OHI, Takashi, Osaka-shi Osaka 530-8323 (JP); SANO, Masakazu, Osaka-shi Osaka 530-8323 (JP)
(74) Representative: Goddar, Heinz J.
(86) International application number: PCT/JP2018/017999
(87) International publication number: WO 2019/026376

(56) References cited:
- EP-A1- 0 683 321
- JP-A- 2009 265 983
- JP-A- 2010 025 103
- JP-A- H09 314 431
- ARNE THESEN ET AL: "Design and evaluation of a selective assembly station for high precision scroll compressor shells", WINTER SIMULATION CONFERENCE PROCEEDINGS, 1999 PHOENIX, AZ, USA 5-8 DEC. 1999, PISCATAWAY, NJ, USA,IEEE, US, 1 December 1999 (1999-12-01), pages 694 - 700, XP058085577, ISBN: 978-0-7803-5780-8, DOI: 10.1145/324138.324460
- KA CHING CHAN ET AL: "A GROUPING METHOD FOR SELECTIVE ASSEMBLY OF PARTS OF DISSIMILAR DISTRIBUTIONS", QUALITY ENGINEERING., vol. 11, no. 2, 1 December 1998 (1998-12-01), US, pages 221 - 234, XP055453465, ISSN: 0898-2112, DOI: 10.1080/08982119808919233
- VICTOR RAJ M ET AL: "Optimization of assembly tolerance variation and manufacturing system efficiency by using genetic algorithm in batch selective assembly", THE INTERNATIONAL JOURNAL OF ADVANCED MANUFACTURING TECHNOLOGY, SPRINGER, BERLIN, DE, vol. 55, no. 9 - 12, 7 January 2011 (2011-01-07), pages 1193 - 1208, XP019920249, ISSN: 1433-3015, DOI: 10.1007/S00170-010-3124-2

## Description

### TECHNICAL FIELD

The present invention relates to a production management system and a production management method.

### BACKGROUND ART

Conventionally, there has been a production management system that is used in a production method of combining individual components produced in lots, to make a product (see, for example, JP 2009-59220 A (Patent Literature 1)).

In the above production management system, products are produced by ranking each component on the basis of finished dimensional accuracy of a predetermined portion of each component produced in lots, and combining components of a same rank on the basis of ranking data created for each rank. ARNE THESEN ET AL: "Design and evaluation of a selective assembly station for high precision scroll compressor shells", WINTER SIMULATION CONFERENCE PROCEEDINGS, 1999 PHOENIX, AZ, USA 5-8 DEC. 1999, IEEE, December 1999, pages 694-700 discloses design and evaluation of a selective assembly station for high precision scroll compressor shells.
In particular, it discloses a production management system for selecting components to be combined from a plurality of component groups, the production management system comprising a first component selection unit that, when combining a component of a first group of components and a component of a second component group among the plurality of component groups, preferentially selects a component having a value far from a tolerance median of the first component group and a second component selection unit that selects, from the second component group, a component that yields a specific dimension within a target dimension range when combined with the component selected from the first component group by the first component selection unit.
KA CHING CHAN ET AL: "A GROUPING METHOD FOR SELECTIVE ASSEMBLY OF PARTS OF DISSIMILAR DISTRIBUTIONS", QUALITY ENGINEERING, vol. 11, no. 2, December 1998, pages 221-234 and VICTOR RAJ M ET AL: "Optimization of assembly tolerance variation and manufacturing system efficiency by using genetic algorithm in batch selective assembly", THE INTERNATIONAL JOURNAL OF ADVANCED MANUFACTURING TECHNOLOGY, SPRINGER, BERLIN, DE, vol. 55, no. 9 - 12, 7 January 2011, pages 1193-1208 as well show production management systems.

### CITATIONS LIST

### PATENT LITERATURE

Patent Literature 1: JP 2009-59220 A

### SUMMARY OF INVENTION

### TECHNICAL PROBLEMS

However, in such a production management system of combining components of a same rank, components in different ranks are not combined even if they can be combined, which causes a problem of a lower combination rate.

Accordingly, an object of the present invention is to provide a production management system and a production management method capable of improving a combination rate of constituent components.

### SOLUTIONS TO PROBLEMS

A production management system according to the present invention is a production management system according to claim 1.

According to the configuration above, when combining a component of the first component group and a component of the second component group among the plurality of component groups, the first component selection unit preferentially selects a component having a value far from the tolerance median of the first component group. Then, the second component selection unit selects, from the second component group, a component that yields a specific dimension within a target dimension range when combined with the component selected from the first component group by the first component selection unit. Repeatedly selecting a component from the first component group by the first component selection unit and selecting a component by the second component selection unit from the second component group makes it possible to search for combinations of all components of the first component group with components of the second component group. Note that, when the second component group includes no component yielding the specific dimension within the target dimension range when combined with a component selected from the first component group by the first component selection unit, the component selected from the first component group is excluded from the components subject to combination.

In this way, the first component selection unit preferentially selects a component having a value far from the tolerance median of the first component group. Therefore, by selecting preferentially a component with lower dimensional accuracy and a lower probability of finding a combination partner from the first component group, and selecting a component that can be combined with that component by the second component selection unit from the second component group, it is possible to reduce the number of components that remain without being combined, as compared to the case of ranking components on the basis of finished dimensional accuracy and combining components of a same rank. Therefore, it is possible to improve the combination rate of constituent components without ranking each component on the basis of finished dimensional accuracy, and to reduce variations of a specific dimension after the combination.

Further, in a production management system of one embodiment, the first component selection unit selects a component from an outermost side with respect to the tolerance median of the first component group.

According to the above embodiment, since the first component selection unit selects a component from the outermost side with respect to the tolerance median of the first component group, the combination rate can be improved by making the selection from the first component group, starting preferentially from a component with lower dimensional accuracy and a lowest probability of finding a combination partner in the first component group, and selecting, by the second component selection unit, from the second component group, a component that can be combined with that component.

Further, in a production management system according to the claimed invention, the first component selection unit selects, as the first component group, a component group having a largest variation in dimension data distribution among the plurality of component groups.

Possibly, the combination rate can be further improved since the combination is performed from a component group including many components with a low probability of finding a combination partner, by the first component selection unit selecting, as the first component group, a component group having a largest variation in dimension data distribution among the plurality of component groups.

Further, in a production management system of one embodiment,
when the second component group has a plurality of components that yield the specific dimension within the target dimension range when combined with a component selected from the first component group by the first component selection unit, the second component selection unit selects a component closer to a reference target value within the target dimension range among the plurality of components.

According to the above embodiment, when the second component group has a plurality of components that yield the specific dimension within the target dimension range when combined with a component selected from the first component group by the first component selection unit, a component closer to the reference target value is selected within the target dimension range among the plurality of components. Therefore, the specific dimension of the combined components is close to the reference target value, and variations in the specific dimension after the combination can be reduced.

Further, in a production management system of one embodiment,
the plurality of component groups are groups of components constituting compressors, and
the first component group first selected from the plurality of component groups in the first component selection unit is of pistons each having a blade and a roller that are integrally formed and the second component group consists of cylinders.

According to the above embodiment, the first component group of compressor pistons each having the integrally formed blade and roller is first selected. Since a variation in an outer diameter dimension of these pistons is larger than that of another component to be combined, it is possible to make combinations, starting preferentially from the group (first component group) of pistons, many of which have a lower probability of finding a combination partner than that of other components.

Further, a production management method according to the present invention is a production management method according to claim 4.

According to the above configuration, in the first step, the first component selection unit preferentially selects a component having a value far from the tolerance median of the first component group in combining a component of the first component group and a component of the second component group among the plurality of component groups. Next, in the second step, the second component selection unit selects, from the second component group, a component yielding a specific dimension within a target dimension range when combined with a component selected from the first component group in the first step. In this way, since the first component selection unit preferentially selects a component having a value far from a tolerance median of the first component group, it is possible to reduce the number of components that remain without being combined, by selecting preferentially a component with lower dimensional accuracy and a lower probability of finding a combination partner in the first component group, and selecting, by the second component selection unit from the second component group, a component that can be combined with that component. Therefore, it is possible to improve the combination rate of constituent components, and to reduce variations of a specific dimension after the combination.

### ADVANTAGEOUS EFFECTS OF INVENTION

As is apparent from the above, according to the present invention, it is possible to realize the production management system and the production management method capable of improving a combination rate of constituent components, by preferentially selecting a component having a value far from a tolerance median of the first component group among the plurality of component groups, and selecting, from the second component group, a component that yields a specific dimension within a target dimension range when combined with the component selected from the first component group by the first component selection unit.

### BRIEF DESCRIPTION OF DRAWINGS

FIG. 1 is a block diagram of a production management system according to a first aspect of the present invention.
FIG. 2 is a view for explaining an operation of the production management system.
FIG. 3 is a view for explaining an operation of a production management system according to a second aspect of the present invention.
FIG. 4 is a cross-sectional view showing a configuration of a compressor produced with a production management system and a production management method according to a preferred embodiment of the present invention.
FIG. 5 is a plan view of a main part of a compression mechanism unit of the compressor.
FIG. 6 is a flowchart for explaining an assembly process of the compression mechanism unit with use of the production management system.
FIG. 7 is a flowchart for explaining another example of the assembly process of the compression mechanism unit with use of the production management system.
FIG. 8 is a view for explaining combined components from a plurality of component groups of the production management system.

### DESCRIPTION OF ASPECTS AND EMBODIMENT

Hereinafter, a production management system and a production management method according to the present invention will be described in detail with reference to the illustrated aspects and embodiments.

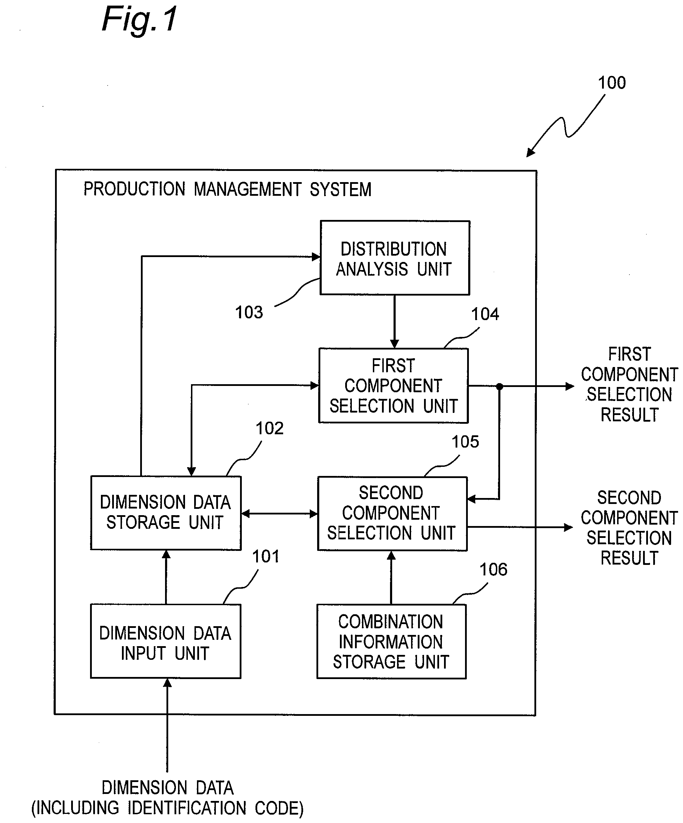

(First aspect) FIG. 1 is a block diagram of a production management system 100 according to a first aspect of the present invention.

As shown in FIG. 1, the production management system 100 according to this first aspect includes a dimension data input unit 101, a dimension data storage unit 102, a distribution analysis unit 103, a first component selection unit 104, a second component selection unit 105, and a combination information storage unit 106.

The dimension data input unit 101 is inputted with dimension data obtained by measuring a finished dimension of a predetermined portion of components, with use of a dimension measuring device (not shown) for each component group, in association with an identification code assigned to each component. In this first aspect, a unit of dimension data is µm.

Further, the dimension data storage unit 102 stores the dimension data inputted to the dimension data input unit 101 for each component group in association with the identification code.

Further, the distribution analysis unit 103 analyzes the dimension data stored for each component group in the dimension data storage unit 102, and obtains a median of drawing tolerance and a position of each component in dimension data distribution.

Here, the median of the dimension data distribution is a value located at a center of the drawing tolerance.

Further, the first component selection unit 104 preferentially selects a component having a value far from a tolerance median of the first component group, on the basis of the dimension data distribution for each component group analyzed by the distribution analysis unit 103.

Here, the first component group is determined in advance as a component group having a largest variation in the dimension data distribution among the plurality of component groups. The variation of the dimension data distribution is determined using, for example, variance, standard deviation, and the like.

In addition, the second component selection unit 105 selects, from the second component group, a component yielding a specific dimension within a target dimension range when combined with the component selected from the first component group by the first component selection unit 104.

Here, the second component group is a group of components suitable for combination with components of the first component group in a manufacturing process.

The combination information storage unit 106 stores in advance a target dimension range of a specific dimension when a component of the first component group and a component of the second component group are combined.

This specific dimension includes, for example, a level difference in a height direction of two components to be combined, a radial gap of two components to be combined, and the like, and is several µm to several tens of µm in the present embodiment.

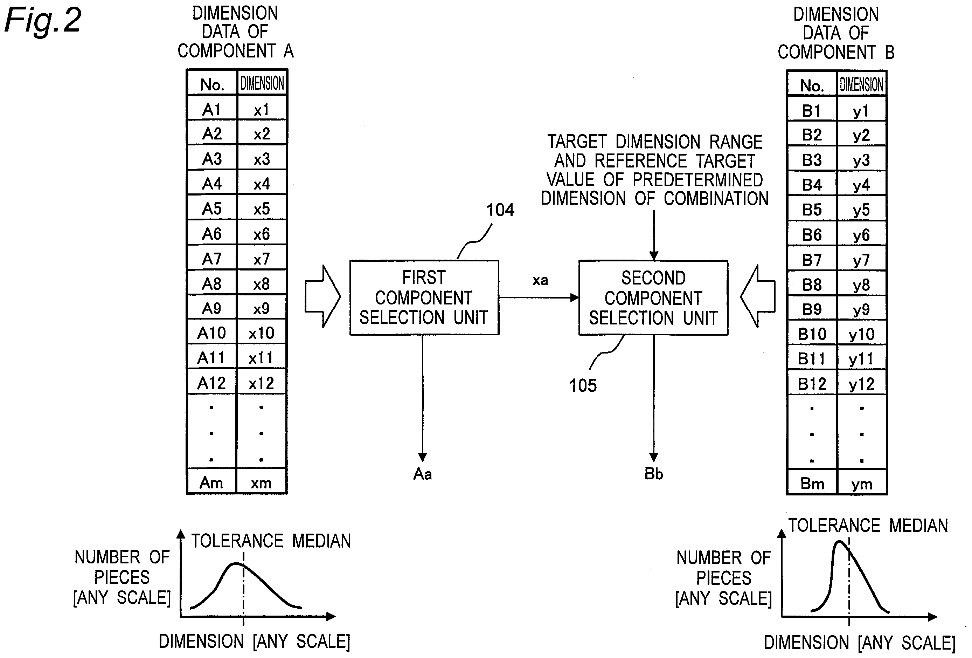

Next, an operation of the production management system 100, that is, a production management method will be described with reference to FIG. 2.

FIG. 2 shows dimension data x1 to xm of a group of components A on the left side, and shows dimension data y1 to ym of a group of components B on the right side. Identification codes A1 to Am are assigned to the group of components A, and identification codes B 1 to Bm are assigned to the group of components B. This group of components A is a first component group, and the group of components B is a second component group.

The dimension data x1 to xm of the group of components A are obtained by analyzing, by the distribution analysis unit 103, the dimension data stored for each component group in the dimension data storage unit 102, and arranging in order from the smallest x1 to the largest xm of the dimension data of the group of components A, but rearrangement of the data is not performed in the dimension data storage unit 102. At this time, the distribution analysis unit 103 obtains a median of drawing tolerance of the component A.

Similarly, for the dimension data y 1 to ym of the group of components B, dimension data for the component group stored in the dimension data storage unit 102 is analyzed by the distribution analysis unit 103. At this time, the distribution analysis unit 103 obtains a median of drawing tolerance of the group of components B.

Then, on the basis of dimension data distribution of the group of components A, the first component selection unit 104 preferentially selects a component Aa (dimension data xa) having a value far from the tolerance median (first step). Here, the component Aa indicates an a-th component among A1 to Am.

Next, on the basis of the dimension data xa of the component Aa, the second component selection unit 105 selects, from the group of components B, a component Bb (dimension data yb) that yields a specific dimension (for example, (xa - yb)) within a target dimension range S_{AB1} to S_{AB2} when combined with the component Aa selected from the group of components A by the first component selection unit 104 (second step). Here, the component Bb indicates a b-th component among B1 to Bm.

In this way, when a set of the component Aa and the component Bb is selected, the component Aa is excluded from the next selection from the dimension data of the group of components A, while the component Bb is excluded from the next selection from the dimension data of the group of components B. Note that, when there is no component B that yields a specific dimension (for example, (xa - yb)) within the target dimension range S_{AB1} to S_{AB2} when combined with the component Aa, the component Aa is excluded from the next selection from the dimension data of the group of components A, and the dimension data storage unit 102 stores information indicating that there is no combination component, in association with the component Aa.

Further, the identification codes of the component Aa and the component Bb as a selection result are outputted to a component picking device (not shown) as a selection signal, and the component picking device takes out Aa and Bb corresponding to the identification codes from a housing that individually houses the groups of components A and components B.

In this way, when a set of the component Aa and the component Bb is selected, or the component Aa is excluded from the selection as there is no component B to be combined with the component Aa, the process returns to the first step. Then, on the basis of dimension data distribution of the group of components A, the first component selection unit 104 preferentially selects a component A having a value far from the tolerance median, and determines a combination of the component A and the component B until there is no selection target (i.e., selectable component) from the group of components A left in the dimension data storage unit 102.

In this case, the component A is selected from an outer side of the tolerance median of the dimension data distribution of the group of components A. More specifically, the component having a larger absolute value of a difference from the tolerance median is selected out of a component A having a largest dimension and a component A having a smallest dimension in the dimension data distribution.

In the first aspect above, on the basis of the selection result of the components A and B, the components are taken out from the housing by the component picking device. However, without limiting to this, a person may take out the components from the housing in accordance with display or print of the selection result of the components A and B.

According to the production management system and production management method configured as described above, in combining a component of the group of components A (first component group) and a component of the group of components B (second component group) among the plurality of component groups, the first component selection unit 104 preferentially selects a component Aa having a value far from the tolerance median of the group of components A. Then, the second component selection unit 105 selects, from the group of components B, a component Bb that yields a specific dimension within the target dimension range S_{AB1} to S_{AB2} when combined with the component Aa selected from the group of components A. By repeatedly selecting components from the group of components A by the first component selection unit 104 and selecting components from the group of components B by the second component selection unit 105, combinations for all components in the group of components A with components in the group of components B are searched for. Here, when there is no component in the group of components B that yields the specific dimension within the target dimension range when combined with a component selected from the group of components A by the first component selection unit 104, the component selected from the group of components A is excluded from the combination.

In this way, the first component selection unit 104 preferentially selects a component having a value far from a tolerance median of the group of components A. Therefore, by selecting preferentially a component with lower dimensional accuracy and a lower probability of finding a combination partner in the group of components A, and selecting a component that can be combined with that component from the group of components B by the second component selection unit 105, it is possible to reduce the number of components that remain without being combined, as compared to the case of ranking components on the basis of finished dimensional accuracy and combining components of a same rank. Therefore, it is possible to improve the combination rate of constituent components without ranking each component on the basis of finished dimensional accuracy, and to reduce variations of a specific dimension after the combination.

In addition, since the first component selection unit 104 selects the component Aa from an outermost, or farthest side with respect to the tolerance median of the group of components A, the combination rate can be improved by making the selection, starting preferentially from a component with lower dimensional accuracy and a lowest probability of finding a combination partner, and selecting a component that can be combined with that component from the group of components B by the second component selection unit 105.

In addition, by the first component selection unit 104 selecting, as the group of components A, a component group having a largest variation in the dimension data distribution among the plurality of component groups, the combination is performed from a component group including many components with a low probability of finding a combination partner, and therefore the combination rate can be further improved.

In addition, when there are a plurality of components in the group of components B that yield a specific dimension within the target dimension range S_{AB1} to S_{AB2} when combined with the component Aa selected from the group of components A by the first component selection unit 104, a component closer to the reference target value S_{AB0} in the target dimension range S_{AB1} to S_{AB2} is selected among the plurality of components. This reference target value S_{AB0} is to be a median of the target dimension range S_{AB1} to S_{AB2}.

This allows the specific dimension of the combined component to be close to the reference target value S_{AB0}, and can reduce variations in the specific dimension after the combination.

### (Second aspect)

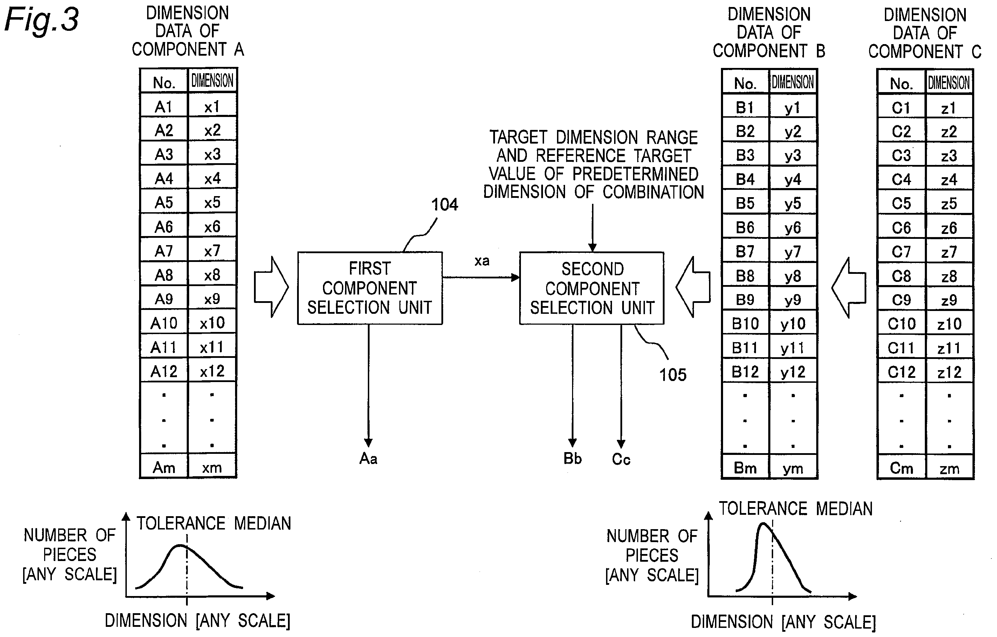

FIG. 3 is a view for explaining an operation (production management method) of a production management system 100 according to a second aspect of the present invention. The production management system 100 of this second aspect has the same configuration as the production management system 100 of the first aspect except that components to be combined are selected from three groups of components A, B, and C. Therefore, FIG. 1 is used.

FIG. 3 shows dimension data x1 to xm of a group of components A on the left side, and shows dimension data y1 to ym of a group of components B and dimension data z1 to zm of a group of components C on the right side. Identification codes A1 to Am are assigned to the group of components A, identification codes B1 to Bm are assigned to the group of components B, and identification codes C1 to Cm are assigned to the group of components C.

The group of components A is a first component group, and the groups of components B and C are second component groups.

Further, similarly to the groups of components A and B, the dimension data z1 to zm of the group of components C are obtained by analyzing, by a distribution analysis unit 103, dimension data stored for each component group in a dimension data storage unit 102, and arranging in order from the smallest z1 to the largest zm of the dimension data of the group of components C, but rearrangement of the dimension data is not performed in the dimension data storage unit 102. At this time, the distribution analysis unit 103 obtains a median of drawing tolerance of the group of components C.

In the production management system 100 of the second embodiment, as shown in FIG. 3, a component Aa in the group of components A and a component Bb in the group of components B are selected as in the first embodiment shown in FIG. 2.

Next, for a component C to be combined with the component Aa and the component Bb, the second component selection unit 105 selects, from the group of components C on the basis of the dimension data xa of the component Aa, a component Cc (dimension data zc) that yields a specific dimension (for example, (xa - zc)) within a target dimension range S_{AC1} to S_{AC2} when combined with the component Aa selected from the group of components A by a first component selection unit 104. Here, the component Cc indicates a c-th component among C1 to Cm.

In this way, when a set of the component Aa, the component Bb, and the component Cc is selected, the component Aa is excluded from the next selection from the dimension data of the group of components A, while the component Bb is excluded from the next selection from the dimension data of the group of components B. Further, the component Cc is excluded from the next selection from the dimension data of the group of components C.

Note that, even when there is no component C that yields a specific dimension (for example, (xa - zc)) when combined with the component Aa within the target dimension range s_{AC1} to s_{AC2}, the component Aa is excluded from the next selection from the dimension data of the group of components A, and the dimension data storage unit 102 stores information indicating that there is no combination component in association with the component Aa.

Further, the identification codes of the component Aa, the component Bb, and the component Cc as a selection result are outputted to a component picking device (not shown) as a selection signal, and the component picking device takes out components Aa, Bb, and Cc corresponding to the identification codes from a housing that individually houses the groups of components A, components B, and components C.

In the second aspect the component Cc (dimension data zc) that yields a specific dimension (for example, (xa - zc)) within the target dimension range S_{AC1} to S_{AC2} when combined with the component Aa selected from the group of components A is selected from the group of components C. However, it is possible to select, from the group of components C, a component Cc (dimension data zc) that yields a specific dimension (for example, (yb - zc)) within a target dimension range S_{BC1} to S_{BC2} when combined with the component Ba selected from the group of components B. The component that yields a specific dimension within the target dimension range when combined with a third component is appropriately determined in accordance with constituent components of the product to be assembled.

Alternatively, the component yielding a specific dimension within the target dimension range when combined with a third component may be both of the components A and B. That is, a combination dimension specified with the components A, B, and C combined may be used, which may be, for example, a total thickness of the components A, B, and C (thickness of component A + thickness of component B + thickness of component B), or the like.

In this way, when a set of the component Aa, the component Bb, and the component Cc is selected, or the component Aa is excluded from the selection as there is no component B or component C to be combined with the component Aa, next, on the basis of dimension data distribution of the group of components A, the first component selection unit 104 preferentially selects a component A having a value far from the tolerance median, and determines a combination of the component A, a component B, and a component C, which process is repeated until there is no selection target left in the group of components A in the dimension data storage unit 102.

The production management system and production management method of the second aspect have effects similar to those of the production management system and production management method of the first aspect.

Further, although the components to be combined are selected from the three groups of components A, B, and C in the second aspect, the components to be combined may be selected from four or more groups of components. In this case, a component group for selecting a component that yields a specific dimension within a target dimension range when combined with the fourth or subsequent component is determined appropriately, as with the component C, in accordance with constituent components of the assembled product, the manufacturing process, and the like.

### (Preferred embodiment)

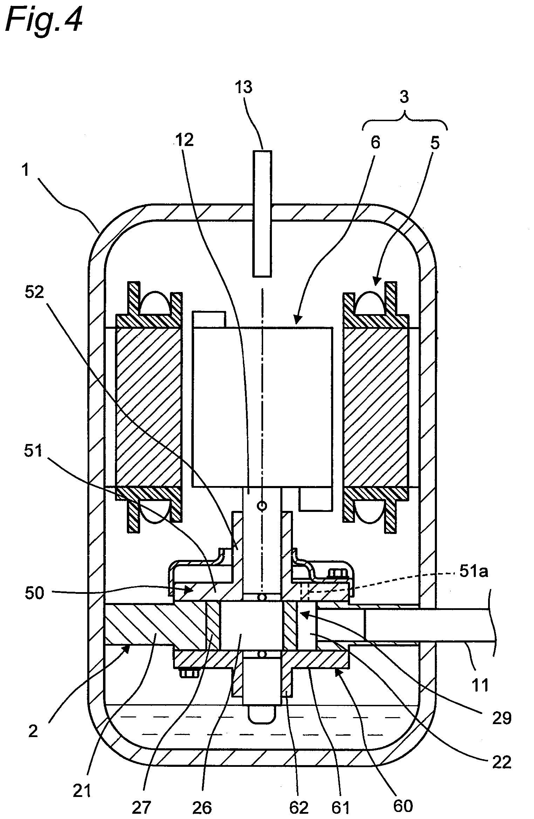

FIG. 4 shows a configuration of a compressor produced with a production management system and a production management method according to a preferred embodiment of the present invention.

As shown in FIG. 4, the compressor includes a hermetic container 1, a compression mechanism unit 2 disposed in this hermetic container 1, and a motor 3 that is disposed in the hermetic container 1 and drives the compression mechanism unit 2 via a crankshaft 12. The compressor is a so-called vertical high-pressure dome-type rotary compressor, and the compression mechanism unit 2 is arranged in a lower part of the hermetic container 1, and the motor 3 is arranged above the compression mechanism unit 2. A rotor 6 of this motor 3 is to drive the compression mechanism unit 2 via the crankshaft 12.

The compression mechanism unit 2 takes in refrigerant gas through a suction pipe 11. Further, the refrigerant gas is compressed by the compression mechanism unit 2 to become high temperature and high pressure, and then discharged from the compression mechanism unit 2 to fill the hermetic container 1. At this time, the refrigerant gas passes through a gap between a stator 5 and the rotor 6, cools the motor 3, and then is discharged outside from a discharge pipe 13 provided above the motor 3.

Further, the compression mechanism unit 2 includes a cylinder 21 to define a cylinder chamber 22, a front head 50 attached to an upper end of this cylinder 21 and located on the cylinder 21, and a rear head 60 attached to a lower end of the cylinder 21 and located under the cylinder 21. The cylinder chamber 22 is formed by the cylinder 21, the front head 50, and the rear head 60. This cylinder chamber 22 houses a piston 29 for compression of the refrigerant gas.

The front head 50 has a disk-shaped main body 51 and a boss 52 that protrudes upward from a center of this main body 51. The crankshaft 12 is rotatably inserted into the main body 51 and the boss 52. Note that the boss 52 is an example of an upper bearing. The main body 51 is provided with a discharge port 51a that communicates with the cylinder chamber 22.

Further, the rear head 60 includes a disk-shaped main body 61 and a boss 62 that protrudes downward from a center of this main body 61. The crankshaft 12 is rotatably inserted into the main body 61 and the boss 62.

Thus, a lower portion of the crankshaft 12 is supported by the front head 50 and the rear head 60. In this lower portion of the crankshaft 12, a portion located between the front head 50 and the rear head 60 enters the cylinder chamber 22.

Further, an eccentric portion 26 is provided at the lower portion of the crankshaft 12 so as to be located in the cylinder chamber 22. The eccentric portion 26 is fitted to a roller 27 of the piston 29. The piston 29 is arranged in the cylinder chamber 22 so as to be capable of revolving, and the revolving motion of the piston 29 causes a compression action.

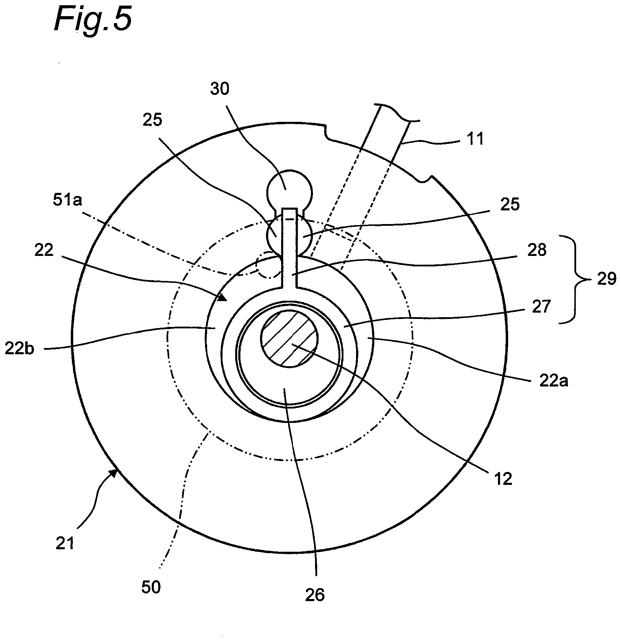

FIG. 5 is a plan view of a main part of the compression mechanism unit 2 of the compressor.

The compressor includes the piston 29 having the roller 27 and a blade 28 that are integrally formed. The blade 28 of the piston 29 partitions the inside of the cylinder chamber 22 into a suction chamber (low pressure chamber) 22a that takes in refrigerant gas from the suction pipe 11, and a discharge chamber (high pressure chamber) 22b in which the discharge port 51a (shown in FIG. 1) opens on an inner surface of the cylinder chamber 22.

Further, a pair of semi-cylindrical bushes 25 and 25 is brought into close contact with both side surfaces of the blade 28, and the bushes 25 and 25 seal spaces adjacent to both side surfaces of the blade 28. These bushes 25 and 25 support the blade 28 such that the blade 28 is able to advance and retract, by sandwiching it from both sides.

When the eccentric portion 26 of the crankshaft 12 rotates eccentrically, the roller 27 of the piston 29 revolves with an outer peripheral surface of the roller 27 being in contact with an inner peripheral surface of the cylinder chamber 22.

<Assembly of compression mechanism unit>

In an assembly process of the compression mechanism unit 2 of the compressor, the production management system 100 of the second embodiment is used. Prior to this assembly process, the piston 29, the cylinder 21, the crankshaft 12, the front head 50, and the rear head 60, which constitute the compression mechanism unit 2, are produced in lots by machining.

Then, dimension data is measured with use of a dimension measuring device (not shown) for each lot of the produced piston 29, cylinder 21, crankshaft 12, front head 50, and rear head 60, and the measured dimension data is inputted to the dimension data input unit 101 (shown in FIG. 1) in association with an identification code assigned to each component.

Then, the dimension data storage unit 102 stores the dimension data inputted to the dimension data input unit 101 for each component group in association with the identification code.

Here, the dimension data of each component is:
piston 29: height, inner diameter, outer diameter, blade width,
cylinder 21: height, inner diameter,
crankshaft 12: shaft outer diameter, outer diameter of eccentric portion, eccentric amount of eccentric portion,
front head 50: inner diameter of shaft bore, and
rear head 60: inner diameter of shaft bore.
Note that the shaft outer diameter of the crankshaft 12 is an outer diameter of a shaft portion of the crankshaft 12 corresponding to the shaft bore of the front head 50 and the shaft bore of the rear head 60.

Further, the distribution analysis unit 103 analyzes the dimension data stored for each component group in the dimension data storage unit 102, to obtain a median of drawing tolerance for each component group and a position of each component in dimension data distribution.

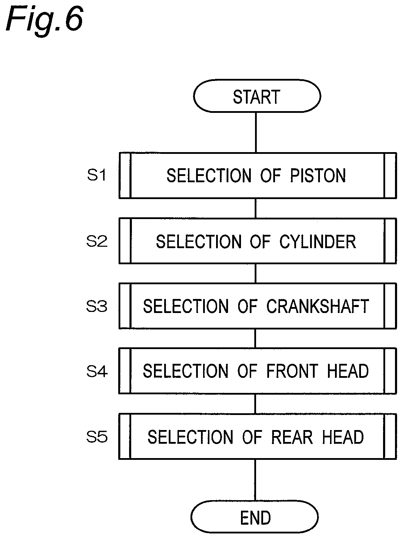

FIG. 6 is a flowchart for explaining the assembly process of the compression mechanism unit 2, with use of the production management system 100.

First, when assembly starts, the piston 29 is selected in step S1. At this time, the first component selection unit 104 (shown in FIG. 1) selects a piston 29 from an outermost side with respect to a tolerance median of the group of pistons 29 (first component group) on the basis of the dimension data distribution for the component group analyzed by the distribution analysis unit 103. That is, the first component selection unit 104 selects a piston 29 having a largest absolute value of a difference from the tolerance median.

Next, the process proceeds to step S2, and the cylinder 21 is selected. That is, a cylinder 21 to be combined with the piston 29 selected in step S1 is selected from a group of cylinders 21 (second component group). At this time, the second component selection unit 105 (shown in FIG. 1) selects, from the group of cylinders 21 (second component group), a cylinder 21 that yields a specific dimension within a target dimension range when combined with the piston 29 selected in step S1.

The specific dimension and the target dimension range in this combination of the piston 29 and the cylinder 21 are stored in the combination information storage unit 106 (shown in FIG. 1). The specific dimension and the target dimension range therefor are the following two, (1) and (2). A cylinder 21 that satisfies both (1) and (2) is selected.
(1) A gap in a width direction of a bush hole of the cylinder 21 [inner diameter of bush hole of cylinder 21 - total width of two bushes 25 - blade width of piston 29]
   The target dimension range is a range allowed for a reference target value of the gap in the width direction.
(2) A level difference in a height direction [height of cylinder 21 - height of piston 29]

The target dimension range is a range allowed for a reference target value of the level difference in the height direction.

Note that, when there are a plurality of cylinders 21, in the group of cylinders 21 (second component group), that yield the specific dimension within the respective target dimension range when combined with the piston 29 selected by the first component selection unit 104, a cylinder 21 closer to a reference target value within the target dimension range is selected among the plurality of cylinders 21. This allows the level difference in the height direction (specific dimension) between the combined piston 29 and cylinder 21 to be close to the reference target value, and can reduce variations in the specific dimension after the combination.

Next, the process proceeds to step S3, and the crankshaft 12 is selected. That is, a crankshaft 12 to be combined with the piston 29 selected in step S 1 is selected from a group of crankshafts 12 (second component group). At this time, the second component selection unit 105 selects, from the group of crankshafts 12 (second component group), a crankshaft 12 that yields a specific dimension within a target dimension range when combined with the piston 29 selected in step S1.

The specific dimension and the target dimension range in this combination of the piston 29 and the crankshaft 12 are stored in the combination information storage unit 106. The specific dimension is a radial gap [inner diameter of piston 29 - outer diameter of eccentric portion 26 of crankshaft 12], and the target dimension range is a range allowed for a reference target value of this radial gap.

Next, the process proceeds to step S4, and the front head 50 is selected. That is, a front head 50 to be combined with the crankshaft 12 selected in step S3 is selected from a group of front heads 50 (second component group). At this time, the second component selection unit 105 selects, from the group of front heads 50 (second component group), a front head 50 that yields a specific dimension within a target dimension range when combined with the crankshaft 12 selected in step S3.

The specific dimension and the target dimension range in this combination of the front head 50 and the crankshaft 12 are stored in the combination information storage unit 106. The specific dimension is a radial gap [inner diameter of shaft bore of front head 50 - outer diameter of crankshaft 12], and the target dimension range is a range allowed for a reference target value of the radial gap.

Next, the process proceeds to step S5, and a rear head 60 is selected. That is, a rear head 60 to be combined with the crankshaft 12 selected in step S3 is selected from a group of rear heads 60 (second component group). At this time, the second component selection unit 105 selects, from the group of rear heads 60 (second component group), a rear head 60 that yields a specific dimension within a target dimension range when combined with the crankshaft 12 selected in step S3.

The specific dimension and the target dimension range in this combination of the rear head 60 and the crankshaft 12 are stored in the combination information storage unit 106. The specific dimension is a radial gap [inner diameter of shaft bore of rear head 60 - outer diameter of crankshaft 12], and the target dimension range is a range allowed for a reference target value of the radial gap.

The combination of the constituent components of the compression mechanism unit 2 is determined by the above steps S1 to S5. Then, in the production management system 100, the selected individual piston 29, cylinder 21, crankshaft 12, front head 50, and rear head 60 are excluded from the next selection, with use of the identification code of each component, from the dimension data stored in the dimension data storage unit 102.

Then, by repeating steps S1 to S5, combinations of constituent components of the compression mechanism unit 2 are determined until there is no selection target left in the group of pistons 29 in the dimension data storage unit 102.

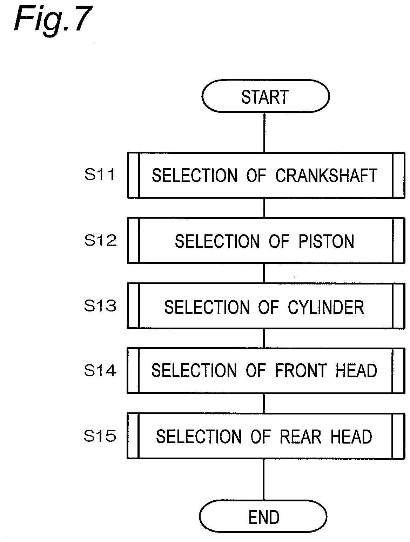

FIG. 7 is a flowchart for explaining another example of the assembly process of the compression mechanism unit, with use of the production management system 100. This assembly process described in FIG. 7 is different from the assembly process of FIG. 6 in that the crankshaft 12, the piston 29, and the cylinder 21 are selected in this order.

First, the crankshaft 12 is selected in step S 11. At this time, the first component selection unit 104 selects a crankshaft 12 from an outermost side with respect to a tolerance median of the group of crankshafts 12 (first component group) on the basis of the dimension data distribution for the component group analyzed by the distribution analysis unit 103. That is, the first component selection unit 104 selects a piston 29 having a largest absolute value of a difference from the tolerance median.

Next, the process proceeds to step S12, and the piston 29 is selected. That is, a piston 29 to be combined with the crankshaft 12 selected in step S11 is selected from a group of pistons 29 (second component group). At this time, the second component selection unit 105 selects, from the group of pistons 29 (second component group), a piston 29 that yields a specific dimension within a target dimension range when combined with the crankshaft 12 selected in step S11.

The specific dimension and the target dimension range in this combination of the crankshaft 12 and the piston 29 are stored in the combination information storage unit 106. The specific dimension is a radial gap [inner diameter of piston 29 - outer diameter of eccentric portion 26 of crankshaft 12], and the target dimension range is a range allowed for a reference target value of the radial gap.

Next, the process proceeds to step S13, and the cylinder 21 is selected. That is, a cylinder 21 to be combined with the piston 29 selected in step S12 is selected from a group of cylinders 21 (second component group). At this time, the second component selection unit 105 selects, from the group of cylinders 21 (second component group), a cylinder 21 that yields a specific dimension within a target dimension range when combined with the piston 29 selected in step S12.

The specific dimension and the target dimension range in this combination of the piston 29 and the cylinder 21 are stored in the combination information storage unit 106. The specific dimension and the target dimension range therefor are the following two, (i) and (ii). A cylinder 21 that satisfies both (i) and (ii) is selected.
(i) A gap in a width direction of a bush hole of the cylinder 21 [inner diameter of bush hole of cylinder 21 - total width of two bushes 25 - blade width of piston 29]
   The target dimension range is a range allowed for a reference target value of the gap in the width direction
(ii) A level difference in a height direction [height of cylinder 21 - height of piston 29]

The target dimension range is a range allowed for a reference target value of the level difference in the height direction

Next, the process proceeds to step S14, and the front head 50 is selected. That is, a front head 50 to be combined with the crankshaft 12 selected in step S11 is selected from a group of front heads 50 (second component group). At this time, the second component selection unit 105 selects, from the group of front heads 50 (second component group), a front head 50 that yields a specific dimension within a target dimension range when combined with the crankshaft 12 selected in step S11.

The specific dimension and the target dimension range in this combination of the front head 50 and the crankshaft 12 are stored in the combination information storage unit 106. The specific dimension is a radial gap [inner diameter of shaft bore of front head 50 - outer diameter of crankshaft 12], and the target dimension range is a range allowed for a reference target value of the radial gap.

Next, the process proceeds to step S15, and the rear head 60 is selected. That is, a rear head 60 to be combined with the crankshaft 12 selected in step S11 is selected from a group of rear heads 60 (second component group). At this time, the second component selection unit 105 selects, from the group of rear heads 60 (second component group), a rear head 60 that yields a specific dimension within a target dimension range when combined with the crankshaft 12 selected in step S11.

The specific dimension and the target dimension range in this combination of the rear head 60 and the crankshaft 12 are stored in the combination information storage unit 106. The specific dimension is a radial gap [inner diameter of shaft bore of rear head 60 - outer diameter of crankshaft 12], and the target dimension range is a range allowed for a reference target value of the radial gap.

The combination of the constituent components of the compression mechanism unit 2 is determined by the above steps S11 to S15. Then, in the production management system 100, the selected individual piston 29, cylinder 21, crankshaft 12, front head 50, and rear head 60 are excluded from the next selection, with use of the identification code of each component, from the dimension data stored in the dimension data storage unit 102.

Then, by repeating steps S11 to S15, combinations of constituent components of the compression mechanism unit 2 are determined until there is no selection target left in the group of crankshafts 12 in the dimension data storage unit 102.

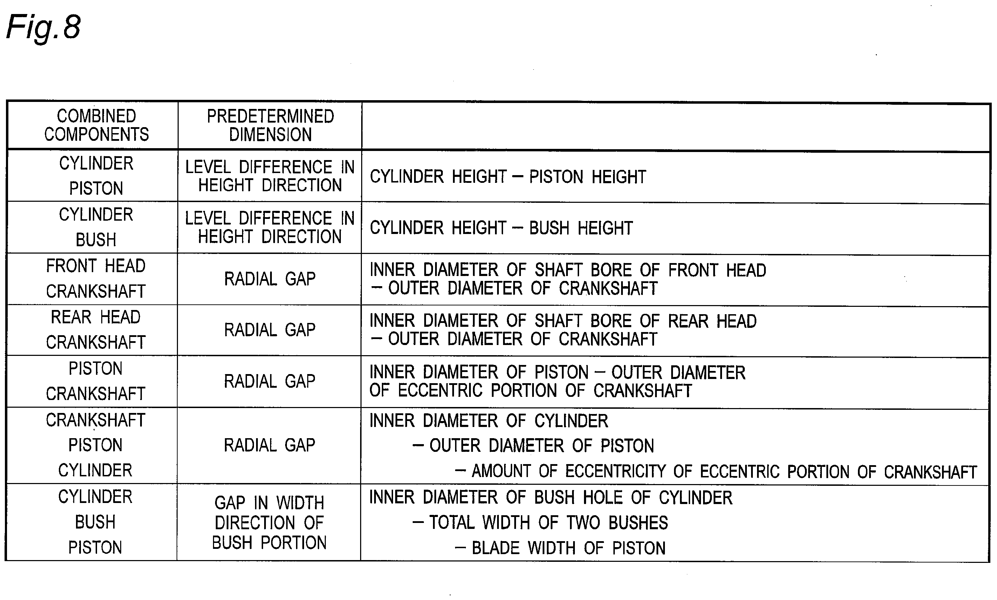

FIG. 8 shows an example of combination components of a plurality of component groups of the production management system.

For example, when the combination components are a cylinder and a piston, the level difference in the height direction (cylinder height - piston height) is the specific dimension. Note that the cylinder height is set to be larger than the piston height.

Further, when the combination components are a cylinder and a bush, the level difference in the height direction (cylinder height - bush height) is the specific dimension. Note that the cylinder height is set to be larger than the bush height.

Further, when the combination components are a front head and a crankshaft, a radial gap (inner diameter of shaft bore of front head - outer diameter of crankshaft) is the specific dimension. Note that the inner diameter of the shaft bore of the front head is set to be larger than the outer diameter of the crankshaft.

Further, when the combination components are a rear head and a crankshaft, a radial gap (inner diameter of shaft bore of rear head - outer diameter of crankshaft) is the specific dimension. Note that the inner diameter of the shaft bore of the rear head is set to be larger than the outer diameter of the crankshaft.

Further, when the combination components are a piston and a crankshaft, a radial gap (inner diameter of piston - outer diameter of eccentric portion of crankshaft) is the specific dimension. Note that the inner diameter of piston is set to be larger than the outer diameter of the eccentric portion of the crankshaft.

Further, when the combination components are three of a crankshaft, a piston, and a cylinder, a radial gap (inner diameter of cylinder - outer diameter of piston - eccentricity of eccentric portion of crankshaft) is the specific dimension. Note that the inner diameter of the cylinder is set to be larger than (the outer diameter of the piston plus the eccentric amount of the eccentric portion of the crankshaft).

Furthermore, when the combination components are three of a cylinder, a bush, and a piston, a radial gap (inner diameter of cylinder bush hole - total width of two bushes - blade width of piston) is the specific dimension. Note that the inner diameter of the cylinder bush hole is set to be larger than (the total width of two bushes minus the blade width of the piston).

In the production management system and production management method configured as described above, first, the group of components A, each of which is the compressor piston 29 integrally formed with the blade 28 and the roller 27, is selected. Since a variation in an outer diameter dimension of this piston 29 is larger than that of another component to be combined, it is possible to make combinations, starting preferentially from the group of pistons 29, many of which have a lower probability of finding a combination partner than that of other components.

The production management system and production management method of the preferred embodiment have effects similar to those of the production management system and production management method of the second aspect.

In the preferred embodiment, the production management system and the production management method used for compressor production have been described. However, the production management system and the production management method according to the present invention can be applied for selecting components constituting other products, without limiting to the compressor.

Although specific embodiments of the present invention have been described, the present invention is not limited to the described embodiments, but may be implemented by making various modifications within the scope of the appended claims. For example, an appropriate combination of the contents described in the first to third embodiments may, when falling within the scope of the appended claims, be used as one embodiment of the present invention.

### REFERENCE SIGNS LIST

- 1: hermetic container
- 2: compression mechanism unit
- 3: motor
- 5: stator
- 6: rotor
- 11: suction pipe
- 12: crankshaft
- 13: discharge pipe
- 21: cylinder
- 22: cylinder chamber
- 22a: suction chamber
- 22b: discharge chamber
- 25: bush
- 26: eccentric portion
- 27: roller
- 28: blade
- 29: piston
- 50: front head
- 51: main body
- 51a: discharge port
- 52: boss
- 60: rear head
- 61: main body
- 62: boss
- 100: production management system
- 101: dimension data input unit
- 102: dimension data storage unit
- 103: distribution analysis unit
- 104: first component selection unit
- 105: second component selection unit
- 106: combination information storage unit

## Claims

1. A production management system for selecting components to be combined from a plurality of component groups, the production management system comprising:
a distribution analysis unit (103), configured to analyze dimension data for each component group to obtain a tolerance median for each component group and a position of each component in the dimension data distribution;
a first component selection unit (104) that, when combining a component of a first component group and a component of a second component group among the plurality of component groups, selects a component having a largest absolute value of a difference from a tolerance median of the first component group on the basis of a dimension data distribution for the first component group analyzed by the distribution analysis unit (103); and
a second component selection unit (105) that selects, from the second component group, a component that yields a specific dimension within a target dimension range when combined with the component selected from the first component group by the first component selection unit (104), **characterized in that**
the first component selection unit (104) selects, as the first component group, a component group having a largest variation in dimension data distribution among the plurality of component groups.

2. The production management system according to claim 1, wherein
when the second component group has a plurality of components that yield the specific dimension within the target dimension range when combined with a component selected from the first component group by the first component selection unit (104), the second component selection unit (105) selects a component that yields a specific dimension of the combined components that is closer to a reference target value within the target dimension range.

3. The production management system according to any one of claims 1 to 2, wherein
the plurality of component groups are groups of components constituting compressors, and
the first component group first selected from the plurality of component groups in the first component selection unit (104) is of pistons (29) each having a blade (28) and a roller (27) that are integrally formed, and
the second component group is of cylinders (21).

4. A production management method for selecting components to be combined from a plurality of component groups, the production management method comprising:
a first step of selecting, by a first component selection unit (104), a component having a largest absolute value of a difference from a tolerance median of a first component group on the basis of a dimension data distribution for the first component group analyzed by a distribution analysis unit (103) configured to analyze dimension data for each component group to obtain a tolerance median for each component group and a position of each component in the dimension data distribution when combining a
component of the first component group and a component of a second component group among the plurality of component groups; and
a second step of selecting, by a second component selection unit (105), from the second component group, a component that yields a specific dimension within a target dimension range when combined with the component selected from the first component group by the first step,
**characterized in that** a component group having a largest variation in dimension data distribution among the plurality of component groups is selected as the first component group by the first component selection unit (104).

## Patentansprüche

1. Produktionsverwaltungssystem zum Auswählen von Komponenten, die aus einer Vielzahl von Komponentengruppen kombiniert werden sollen, wobei das Produktionsverwaltungssystem umfasst:
eine Verteilungsanalyseeinheit (103), die konfiguriert ist, um Dimensionsdaten für jede Komponentengruppe zu analysieren, um einen Toleranzmedian für jede Komponentengruppe und eine Position jeder Komponente in der Dimensionsdatenverteilung zu erhalten;
eine erste Komponentenauswahleinheit (104), die, wenn eine Komponente einer ersten Komponentengruppe und eine Komponente einer zweiten Komponentengruppe aus der Vielzahl von Komponentengruppen kombiniert werden, eine Komponente mit einem größten Absolutwert einer Differenz von einem Toleranzmedian der ersten Komponentengruppe auf der Grundlage einer Dimensionsdatenverteilung für die erste Komponentengruppe, die durch die Verteilungsanalyseeinheit (103) analysiert wird, auswählt; und
eine zweite Komponentenauswahleinheit (105), die aus der zweiten Komponentengruppe eine Komponente auswählt, die eine spezifische Dimension innerhalb eines Zieldimensionsbereichs ergibt, wenn sie mit der Komponente kombiniert wird, die aus der ersten Komponentengruppe durch die erste Komponentenauswahleinheit (104) ausgewählt wird, **dadurch gekennzeichnet, dass**
die erste Komponentenauswahleinheit (104) als die erste Komponentengruppe eine Komponentengruppe mit einer größten Variation der Dimensionsdatenverteilung aus der Vielzahl von Komponentengruppen auswählt.

2. Produktionsverwaltungssystem nach Anspruch 1, wobei wenn die zweite Komponentengruppe eine Vielzahl von Komponenten aufweist, die die spezifische Dimension innerhalb des Zieldimensionsbereichs ergeben, wenn sie mit einer Komponente kombiniert werden, die aus der ersten Komponentengruppe durch die erste Komponentenauswahleinheit (104) ausgewählt wird, die zweite Komponentenauswahleinheit (105) eine Komponente auswählt, die eine spezifische Dimension der kombinierten Komponenten ergibt, die näher an einem Referenzzielwert innerhalb des Zieldimensionsbereichs liegt.

3. Produktionsverwaltungssystem nach einem der Ansprüche 1 bis 2, wobei
die Vielzahl von Komponentengruppen Gruppen von Komponenten sind, die Verdichter bilden, und
die erste Komponentengruppe, die zuerst aus der Vielzahl von Komponentengruppen in der ersten Komponentenauswahleinheit (104) ausgewählt wird, aus Kolben (29) besteht, die jeweils eine Schaufel (28) und eine Rolle (27) aufweisen, die einstückig ausgebildet sind, und
die zweite Komponentengruppe aus Zylindern (21) besteht.

4. Produktionsverwaltungsverfahren zum Auswählen von Komponenten, die aus einer Vielzahl von Komponentengruppen kombiniert werden sollen, wobei das Produktionsverwaltungsverfahren umfasst:
einen ersten Schritt des Auswählens, durch eine erste Komponentenauswahleinheit (104), einer Komponente mit einem größten Absolutwert einer Differenz von einem Toleranzmedian einer ersten Komponentengruppe auf der Grundlage einer Dimensionsdatenverteilung für die erste Komponentengruppe, die durch eine Verteilungsanalyseeinheit (103) analysiert wird, die konfiguriert ist, um Dimensionsdaten für jede Komponentengruppe zu analysieren, um einen Toleranzmedian für jede Komponentengruppe und eine Position jeder Komponente in der Dimensionsdatenverteilung zu erhalten, wenn eine Komponente der ersten Komponentengruppe und eine Komponente einer zweiten Komponentengruppe aus der Vielzahl von Komponentengruppen kombiniert werden; und
einen zweiten Schritt des Auswählens, durch eine zweite Komponentenauswahleinheit (105), aus der zweiten Komponentengruppe einer Komponente, die eine spezifische Dimension innerhalb eines Zieldimensionsbereichs ergibt, wenn sie mit der Komponente kombiniert wird, die aus der ersten Komponentengruppe durch den ersten Schritt ausgewählt wird, **dadurch gekennzeichnet, dass** eine Komponentengruppe mit einer größten Variation der Dimensionsdatenverteilung aus der Vielzahl von Komponentengruppen als die erste Komponentengruppe durch die erste Komponentenauswahleinheit (104) ausgewählt wird.

## Revendications

1. Système de gestion de production destiné à sélectionner des composants à combiner dans une pluralité de groupes de composants, le système de gestion de production comprenant :
une unité d'analyse de distribution (103), configurée pour analyser les données de dimensions pour chaque groupe de composants pour obtenir une médiane de tolérance pour chaque groupe de composants et une position de chaque composant dans la distribution des données de dimensions ;
une première unité de sélection de composant (104) qui, lors de la combinaison d'un composant d'un premier groupe de composants et d'un composant d'un deuxième groupe de composants parmi la pluralité de groupes de composants, sélectionne un composant ayant la valeur absolue la plus importante d'une différence d'une médiane de tolérance du premier groupe de composants sur la base d'une distribution des données de dimensions pour le premier groupe de composants analysés par l'unité d'analyse de distribution (103) ; et
une deuxième unité de sélection de composant (105) qui sélectionne, dans le deuxième groupe de composants, un composant qui donne une dimension spécifique dans une plage de dimensions cible quand il est combiné avec le composant sélectionné dans le premier groupe de composants par la première unité de sélection de composant (104), **caractérisé en ce que**
la première unité de sélection de composant (104) sélectionne, en tant que premier groupe de composants, un groupe de composants ayant la variation la plus importante dans la distribution des données de dimensions parmi la pluralité de groupes de composants.

2. Système de gestion de production selon la revendication 1, dans lequel
quand le deuxième groupe de composants a une pluralité de composants qui donnent la dimension spécifique dans la plage de dimensions cible quand il est combiné avec un composant sélectionné dans le premier groupe de composants par la première unité de sélection de composant (104), la deuxième unité de sélection de composant (105) sélectionne un composant qui donne une dimension spécifique des composants combinés qui est plus proche d'une valeur cible de référence dans la plage de dimensions cible.

3. Système de gestion de production selon l'une quelconque des revendications 1 to 2, dans lequel
la pluralité de groupes de composants sont des groupes de composants constituant des compresseurs, et
le premier groupe de composants sélectionné en premier dans la pluralité de groupes de composants dans la première unité de sélection de composant (104) est des pistons (29) chacun ayant une lame (28) et un rouleau (27) qui en font partie intégrante, et
le deuxième groupe de composants est des cylindres (21).

4. Procédé de gestion de production destiné à sélectionner des composants à combiner dans une pluralité de groupes de composants, le procédé de gestion de production comprenant :
une première étape consistant à sélectionner, par une première unité de sélection de composant (104), un composant ayant la valeur absolue la plus importante d'une différence d'une médiane de tolérance d'un premier groupe de composants sur la base d'une distribution des données de dimensions pour le premier groupe de composants analysés par une unité d'analyse de distribution (103) configurée pour analyser les données de dimensions pour chaque groupe de composants pour obtenir une médiane de tolérance pour chaque groupe de composants et une position de chaque composant dans la distribution des données de dimensions lors de la combinaison d'un composant du premier groupe de composants et d'un composant d'un deuxième groupe de composants parmi la pluralité de groupes de composants ; et
une deuxième étape consistant à sélectionner, par une deuxième unité de sélection de composant (105), dans le deuxième groupe de composants, un composant qui donne une dimension spécifique dans une plage de dimensions cible quand il est combiné avec le composant sélectionné dans le premier groupe de composants par la première étape,
**caractérisé en ce qu'**un groupe de composants ayant la variation la plus importante dans la distribution des données de dimensions parmi la pluralité de groupes de composants est sélectionné en tant que premier groupe de composants par la première unité de sélection de composant (104).
